Europäisches Patentamt

European Patent Office

Office européen des brevets

(19)

(11) **EP 0 632 615 B1**

(12) **EUROPÄISCHE PATENTSCHRIFT**

(45) Veröffentlichungstag und Bekanntmachung des Hinweises auf die Patenterteilung:
**24.02.1999 Patentblatt 1999/08**

(51) Int Cl.$^6$: **H04L 9/08**

(21) Anmeldenummer: **93110455.8**

(22) Anmeldetag: **30.06.1993**

(54) **Verfahren zur Datensicherung in einem Pay-TV-System unter Verwendung eines Kryptosystems mit öffentlichem Schlüssel**

Method for data security in a pay-TV system using public key cryptography

Procédé pour la sécurisation de données dans un système de télévision à péage utilisant une cryptographie à clé publique

(84) Benannte Vertragsstaaten:
**AT BE CH DE FR GB IT LI NL SE**

(43) Veröffentlichungstag der Anmeldung:
**04.01.1995 Patentblatt 1995/01**

(73) Patentinhaber: **SIEMENS AKTIENGESELLSCHAFT
80333 München (DE)**

(72) Erfinder: **Möhrmann, Karl Heinz, Dipl.-Ing.
D-81369 München (DE)**

(56) Entgegenhaltungen:
- **PROCEEDINGS OF THE IEEE/IEICE GLOBAL TELECOMMUNICATIONS CONFERENCE 1987 15-18 November 1987, Tokyo (JP) NEW YORK (US) Seiten 1439-1443, XP000043860 N.TOKURA ET AL.: "A BROADBAND SUBSCRIBER NETWORK USING OPTICAL STAR COUPLERS"**
- **RUNDFUNKTECHNISCHE MITTEILUNGEN Bd. 29, Nr. 6 , November 1985 , NORDERSTEDT DE Seiten 298 - 303 L.DANILENKO 'EIN KRYPTOGRAPHISCHES SYSTEMKONZEPT FÜR PAY-TV MIT DEZENTRALER SCHLÜSSELVERWALTUNG'**
- **JOURNAL OF LIGHTWAVE TECHNOLOGY Bd. 7, Nr. 11 , November 1989 , NEW YORK US Seiten 1752 - 1758 XP000104010 I.MCGREGOR ET AL. 'IMPLEMENTATION OF A TDM PASSIVE OPTICAL NETWORK FOR SUBSCRIBER LOOP APPLICATIONS'**
- **ELECTRONICS LETTERS Bd. 24, Nr. 11 , 26. Mai 1988 , ENAGE GB Seiten 654 - 656 XP000005166 D.W.FAULKNER ET AL. 'NOVEL SAMPLING TECHNIQUE FOR DIGITAL VIDEO DEMULTIPLEXING, DESCRAMBLING AND CHANNEL SELECTION'**

## Beschreibung

In mit passiven Faserverzweigern gebildeten optischen Doppel-Stern-Netzen, in denen jede dezentrale Telekommunikationseinrichtung die von der zentralen Telekommunikationseinrichtung ausgesendeten Downstream-Informationen empfängt und daraus nur die für sie bestimmten Informationen zwecks Weitergabe an den (die) angeschlossenen Teilnehmer aussortiert, besteht grundsätzlich die Möglichkeit eines Zugriffs auf Informationen, die für andere Teilnehmer bestimmt sind, die an andere dezentrale Telekommunikationseinrichtungen angeschlossen sind.

Um dem zu begegnen, ist es für ein Telekommunikationssystem, in dem eine Mehrzahl von Teilnehmerstellen mit Lichtwellenleiter-Teilnehmeranschlußleitungen über eine oder mehrere optische Verzweigereinrichtung(en) an eine mit einer Vermittlungsstelle verbundene Lichtwellenleiter-Anschlußleitung angeschlossen sind, wobei an einer optischen Verzweigereinrichtung eine oder mehrere Teilnehmerstellen angeschlossen sein können, schon (aus DE-C2-39 25 605) bekannt, daß in den Teilnehmerstellen jeweils eine Schaltung vorgesehen ist, die während des Verbindungsaufbaus zwischen Teilnehmerstelle und Vermittlungsstelle einen Kodierschlüssel initiiert und diesen zur Vermittlungsstelle sendet, wonach die von der Vermittlungsstelle zur Teilnehmerstelle zu übertragenden Digitalsignale mit diesem Kodierschlüssel verschlüsselt gesendet werden.
Diese bekannte Lösung, die prinzipiell auch bei Übertragung von ATM-Zellen funktioniert, schließt indessen damit, daß zu Beginn der Übertragung der zu verwendende Schlüssel von der dezentralen Telekommunikationseinrichtung zur zentralen Einrichtung hin übertragen wird, nicht mit Sicherheit aus, daß ein Unbefugter, der auf irgendeine Weise absichtlich oder auch nur unabsichtlich - und sei es auch nur durch eine Fehlfunktion der elektronischen Einrichtungen im Netz - Zugriff zu diesem Schlüssel erlangt, auch die damit verschlüsselten Downstream-Signale entschlüsseln kann. Unabhängig davon wächst die Gefahr einer unbefugten Entschlüsselung auch dann, wenn eine Verbindung (wie beispielsweise eine Standverbindung) lange besteht, da der Angreifer dann hinreichend Zeit dazu hat.

Eine wirkungsvollere Sicherung eines passiven optischen Telekommunikationssystems gegen unberechtigten Zugriff auf die darin übertragenen Digitalsignale bietet ein (aus DE-C1-42 04 461 bekanntes) Verfahren zur Datensicherung in einem Telekommunikationssystem mit einer zentralen Telekommunikationseinrichtung und einer Mehrzahl von dezentralen Telekommunikationseinrichtungen, die jeweils über eine eigene Lichtwellenleiter-Anschlußleitung mit einem optischen Verzweiger verbunden sind, der direkt oder über wenigstens einen weiteren optischen Verzweiger mit einem gemeinsamen Lichtwellenleiteranschluß der zentralen Telekommunikationseinrichtung über einen Lichtwellenleiter-Bus verbunden ist, wobei die Signalübertragung von der zentralen Telekommunikationseinrichtung aus zu den dezentralen Einrichtungen hin in einem Multiplexrahmen oder in einem ATM-Zellenstrom vor sich geht und die Signalübertragung von den dezentralen Telekommunikationseinrichtungen aus zur zentralen Einrichtung hin jeweils in einem der jeweiligen dezentralen Einrichtung zugeordneten Zeitkanal des Multiplexrahmens vorzugsweise unter adaptiver Steuerung der Zeitlage des Zeitkanals in einem TDMA-Verfahren bzw. mittels ATM-Zellen in einem TDMA-Verfahren vor sich geht; diesem Verfahren zufolge wird aus einem in einer dezentralen Telekommunikationseinrichtung vorgegebenen geheimen Schlüssel ein öffentlicher Schlüssel ermittelt, der in Aufwärtsrichtung zu der zentralen Telekommunikationseinrichtung übermittelt wird, wo er zum Verschlüsseln von (Sekundärschlüssel-) Informationen zur Anpassung der dezentralen Einrichtung an in der zentralen Einrichtung für diese dezentrale Einrichtung individuell vorgesehene, wiederholt geänderte Übertragungsmodalitäten benutzt wird.

Die Problematik eines unberechtigten Zugriffs auf in einem Telekommunikationssystem übertragene Digitalsignale besteht indessen nicht nur in Passiven Optischen Netzen (PON) der im vorstehenden umrissenen Art, sondern stellt sich in der Telekommunikationstechnik auch in anderem Zusammenhang, beispielsweise bei einer TV-Programmverteilung von Pay-TV-Programmen, und die Erfindung zeigt nun einen eg zu einer wirkungsvollen Sicherung von Pay-TV-Programmsignalen gegen unberechtigten Zugriff.

Die Erfindung betrifft ein Verfahren zur Datensicherung in einem eine zentrale Telekommunikationseinrichtung und eine Mehrzahl von dezentralen Telekommunikationseinrichtungen umfassenden Digital-Telekommunikationssystem, insbesondere B-ISDN-Telekommunikationssystem, in dem die Signalübertragung von der zentralen Telekommunikationseinrichtung aus zu den dezentralen Einrichtungen hin mittels ATM-Zellen vor sich geht; dieses Verfahren ist erfindungsgemäß dadurch gekennzeichnet, daß bei Pay-TV-Verteilung mittels ATM ein zu einem bei einem Pay-TV-Empfänger vorgegebenen geheimen Schlüssel passender öffentlicher Schlüssel in der Programmverteilzentrale zum Verschlüsseln von (Sekundärschlüssel-)Informationen zur Anpassung des Pay-TV-Empfängers an in der Programmverteilzentrale für den Pay-TV-Empfänger vorgesehene, wiederholt geänderte Übertragungsmodalitäten benutzt wird.

Die Erfindung, die sich bei der Verschlüsselung der Übertragungsmodalitäten-Information eines sog. Public-Key-Systems bedient, bringt den Vorteil mit sich, auf eine Übertragung geheimer Schlüssel verzichten zu können und dennoch eine hohe Sicherheit der von der Programmverteilzentrale aus zu den Pay-TV-Empfängern hin übertragenen Digitalsignale gegen unberechtigten Zugriff und Mithören zu gewährleisten, selbst wenn es sich um relativ lange bestehende Verbindungen handelt. Der erforderliche Rechenaufwand für ein Public-Key-Verfahren ist im Prinzip zwar hoch; da die verschlüsselte Mitteilung neuer Übertragungsmodalitäten aber nur gelegentlich, nämlich im Zusammenhang mit einer von der Programmverteilzentrale in gewissen zeitlichen Abständen durchgeführten Änderung solcher Modalitäten, notwendig ist, sind die Errechnung von Schlüsseln und die Verschlüsselung nicht zeitkritisch, so daß sie mit einem relativ einfachen Rechenwerk off-line per Software bewirkt werden können.

Es sei an dieser Stelle bemerkt, daß es (aus PATENTS ABSTRACTS OF JAPAN, E-429, 19.08.1086, Vol. 10, No. 240 (JP-A-61-72 437)) bekannt ist, daß zur Telekommunikation zwischen dezentralen Kommunikationseinrichtungen diese öffentliche und geheime Schlüssel verwenden, wobei die dezentralten Kommunikationseinrichtungen die öffentlichen Schlüssel ihrer Kommunikationspartner von einer zentralen Schlüsselmanagementeinrichtung abrufen, die dabei individuelle Kennungen der dezentralen Einrichtungen verschlüsselt.

Aus "Ein krytographisches Systemkonzept für Pay-TV mit dezentraler Schlüsselverwaltung DANILENKO, Rundfunktechnische Mitteilungen, NOR ERSTEDT, DE, Nov. 85, ist ein Verfahren zu entnehmen, wobei ein persönnlicher Codeschlüssel, deraus einem geheimen Schlüssel und aus einem öffentichen Schlüssel besteht, bei dem Teilnehmer generiert ist. Der öffentliche Schlüssel dient des Chiffrierung von den übertragenen Signale.

Nähere Berührungspunkte mit der vorliegenden Erfindung sind nicht gegeben.

Zur eigentlichen Sicherung des laufenden Digitalsignalstroms kann in weiterer Ausgestaltung der Erfindung jeweils die Anfangsstellung und/oder die Struktur eines in der Programmverteilzentrale vorgesehenen Scramblers und eines im Pay-TV-Empfänger vorgesehenen Descramblers zu Rahmenbeginn wiederholt geändert werden, indem die Programmverteilzentrale mittels eines Zufallszahlengenerators jeweils eine zufällige neue Anfangsstellung und /oder Struktur für den Scrambler ermittelt und die zugehörige Anfangsstellung und/oder Struktur des Descramblers mit einem zu dem beim jeweiligen Pay-TV-Empfänger vorgegebenen geheimen Schlüssel passenden öffentlichen Schlüssel verschlüsselt dem betreffenden Pay-TV-Empfänger mitteilt, der diese Mitteilung mit dem zugehörigen geheimen Schlüssel entschlüsselt, wonach die Änderung von einem bestimmten Pulsrahmen an durchgeführt wird.

Mit anderen Worten: Bei Übertragung von ATM-Zellen wird das in der Zelle enthaltene Nutzsignal in der Programmverteilzentrale verscrambelt, und nur ein ein Ziel der ATM-Zelle bildender Pay-TV-Empfänger weiß, wie das Signal zu descrambeln ist, da die zu Beginn des Nutzinformationsteils (payload) der Zelle erforderliche Anfangsstellung und ggf. auch die Struktur des Scramblers nur ihm verständlich verschlüsselt mitgeteilt wurden.

Die Übertragungsmodalitäten für verschiedene Pay-TV-Empfänger oder Gruppen von Pay-TV-Empfängern können in weiterer Ausgestaltung der Erfindung zu verschiedenen Zeitpunkten geändert werden, was einen Zugriff weiter erschwert.

Die Erfindung wird nachfolgend noch weiter erläutert.

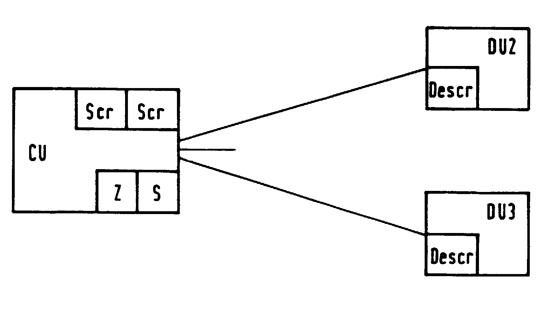

In der Zeichnung ist schematisch in einem zum Verständnis der Erfindung erforderlichen Umfang ein Ausführungsbeispiel eines Telekommunikationssystems mit einer zentralen Telekommunikationseinrichtung CU zur TV-Programmverteilung und einer Mehrzahl von dezentralen Telekommunikationseinrichtungen ..., DU2, DU3,... in Form von Pay-TV-Empfängern dargestellt.

In dem skizzierten Telekommunikationssystem kann, wie dies an sich bekannt ist, die Signalübertragung mit ATM-Zellen vor sich gehen. Jede (53 Bit-Oktetts umfassende) ATM-Zelle besteht z.B. aus einem (5-Oktett-)Steuerinformationsfeld (Header) und einem (48 Oktetts umfassenden) Nutzinformationsfeld. Teil des Headers ist der (16 Bits umfassende) sog. Virtual Path Identifier; ein anderer Teil des Headers ist das sog. Access Control Field.

In den ATM-Zellenstrom können, wenn gerade keine Nutzinformation zu übertragen ist, Synchronisierzellen mit vorgegebenem Bitmuster zur Synchronisation der Teilnehmerstellen auf den jeweiligen Zellenanfang eingeblendet sein (sog. pure ATM); es ist aber auch möglich, daß der ATM-Zellenstrom seinerseits in eine (z.B. STM-1-)Zeitrahmenstruktur mit in bestimmten festen Abständen auftretenden Synchronisiersignalen (Overhead) eingebettet ist (sog. frame structured ATM).

Aus dem ATM-Zellenstrom entnimmt jeder Pay-TV-Empfänger nur diejenigen ATM-Zellen, die in ihrem Header, vorzugsweise in dessen Virtual Path Identifier, mit einer eben diesem Pay-TV-Empfänger zugeordneten Kennzeichnung adressiert sind.

Wie in der Zeichnung angedeutet ist, sind die Pay-TV-Empfänger ..., DU2, DU3, ... jeweils mit einem Descrambler Descr versehen, der das für den betreffenden Pay-TV-Empfänger bestimmte, in der Programmverteilzentrale CU verscrambelte TV-Programm-Digitalsignal entscrambelt.

Die Programmverteilzentrale CU weist zum Verscrambeln je Pay-TV-Empfänger ..., DU2, DU3, ... jeweils einen eigenen Scrambler ..., Scr2, Scr3, ... auf. Dieser muß nicht in Hardware realisiert sein, sondern kann mittels Software oder mittels einer einzigen, umschaltbaren Hardware-Struktur realisiert sein.

Das Verscrambeln kann z.B. in Form einer fortlaufenden mod-2-Addition der Informationsbits mit einer zufallsähnlichen Bitfolge vor sich gehen; für die Erzeugung solcher Bitfolgen gibt es vielfältige Möglichkeiten, so daß es hier weiterer Erläuterungen dazu nicht bedarf.

Scrambler und Descrambler werden wiederholt verändert; dazu wird die notwendige Anfangsstellung für den Descrambler Descr des Pay-TV-Empfängers DU jeweils rechtzeitig von der Programmverteilzentrale CU mit einem sog. Public Key verschlüsselt mitgeteilt. Dieser öffentliche Schlüssel wird im Pay-TV-Empfänger oder in der Programmverteilzentrale CU aus einem geheimen Schlüssel ermittelt, den der Programmanbieter im letzten Fall für den Pay-TV-Empfänger DU vorgibt; der Pay-TV-Teilnehmer erhält den geheimen Dechiffrierschlüssel z.B. in Form einer Chipkarte. Im ersten Fall wird der öffentliche Schlüssel vom Pay-TV-Empfänger zur Programmverteilzentrale CU zurückübertragen. Mit dem öffentlichen Schlüssel verschlüsselt wird die genannte Information über die Anfangsstellung des Descramblers Descr gewissermaßen als eine Sekundärschlüsselinformation von der Programmverteilzentrale CU ausgesendet; entschlüsselt werden kann diese Information über die geänderten Übertragungsmodalitäten nur mit dem zugrunde liegenden geheimen Schlüssel und damit nur von demjenigen Pay-TV-Empfänger DU, für den die betreffende Information bestimmt ist und der somit im Besitz des geheimen Dechiffrierschlüssels ist.

Public-Key-Verfahren sind an sich (z.B. aus ntz 38(1985)9, 636...638 bekannt; sie verwenden zur Schlüsselbildung sog. one-way-Funktionen. Bei one-way-Funktionen handelt es sich um Funktionen, deren Funktionswert relativ einfach zu berechnen ist, während die Berechnung der Inversen kaum möglich ist. "Einfach" und "kaum möglich" meint dabei den rechnerischen Aufwand und hängt somit vom Entwicklungsstand der jeweiligen Computergenerationen ab. (Jansen, Pohlmann: "Kryptographie in der Telematik", ntz 38 (1985)9, 636 ... 638):

So beruht ein bekanntes Public-Key-Verfahren beispielsweise darauf, daß es ganz einfach ist, durch Multiplikation einer Anzahl von Primzahlen eine große natürliche Zahl zu errechnen, daß es aber kaum möglich ist, diese große natürliche Zahl wieder in ihre Primfaktoren zu zerlegen (Rivest, Shamir, Adleman: "A method for obtaining digital signatures and public-key cryptosystems", Communications of the ACM 21(1978)2, 120 ... 126). Bei diesem bekannten Verfahren wird aus einem Klartext M ein Schlüsseltext C durch eine mathematische Transformation

$$C = M^e \text{ (mod n)}$$

erhalten. Die inverse Transformation, mit der man aus dem Schlüsseltext wieder den Klartext erhält, lautet

$$M = C^d \text{ (mod n)}.$$

M ist eine positive ganze Zahl, die zwischen 0 und n-1 liegen muß. Es ergeben sich dann die Schlüsselpaare

(e,n) für den öffentlichen Schlüssel und
(d,n) für den geheimen Schlüssel.

Bei der Errechnung der Schlüssel wird zunächst n als Produkt aus zwei sehr großen, frei gewählten Primzahlen p und q berechnet (die Zahlen werden mittels eines Zufallszahlengenerators erzeugt und bleiben geheim):

$$n = p \cdot q, \text{ mit p ungleich q.}$$

Da es zu enormen Schwierigkeiten führt, umgekehrt aus n die Primzahlen p und q zu ermitteln, kann n als Bestandteil des öffentlichen Schlüssels bekanntgegeben werden.

Als geheimer Schlüssel d wird eine große (in ernsthaften Anwendungen ca. 100stellige), frei gewählte ganze Zahl verwendet, die relativ prim zu (p-1)·(q-1) sein muß. Hat man so p, q und d bestimmt, so läßt sich der öffentliche Schlüssel e durch "Inverse Multiplikation":

$$e \cdot d \text{ (mod(p-1)} \cdot \text{(q-1))} = 1$$

erzeugen. Für Primzahlerzeugung und Schlüsselgenerierung existieren spezielle mathematische Algorithmen. Auf Grund der komplexen Rechtenvorgänge ist die mögliche Durchsatzrate allerdings gering (einige zig bit/s).

Die Anfangsstellung der in der Programmverteilzentrale CU vorgesehenen, den einzelnen Pay-TV-Empfängern DU zugeordneten Scrambler Scr und der bei den Pay-TV-Empfängern DU vorgesehenen Descrambler Descr kann wiederholt geändert werden, indem die Programmverteilzentrale CU mittels eines Zufallszahlengenerators Z jeweils eine zufällige neue Anfangsstellung für die den einzelnen Pay-TV-Empfängern DU zugeordneten Scrambler Scr ermittelt und die jeweils zugehörige Anfangsstellung des zugehörigen Descramblers Descr mit dem öffentlichen Schlüssel verschlüsselt dem betreffenden Pay-TV-Empfänger DU mitteilt; dort wird diese Mitteilung mit dem zugehörigen geheimen Schlüssel entschlüsselt, wonach die Änderung von einem bestimmten Pulsrahmen an durchgeführt wird.

Den Pay-TV-Empfängern DU können vom Programmanbieter in gewissen Zeitabständen neue Schlüssel vorgegeben werden, zu denen die Programmverteilzentrale jeweils einen neuen öffentlichen Schlüssel errechnet; die Programmverteilzentrale CU kann dann nach Ermittlung einer neuen Scrambler-Anfangsstellung die zugehörige Descrambler-Anfangsstellung mit dem neuen öffentlichen Schlüssel verschlüsseln und dem betreffenden Pay-TV-Empfänger DU die Änderung der Anfangsstellung mitteilen, die dann wiederum von einem bestimmten Pulsrahmen an durchgeführt wird. Nicht nur die Anfangsstellung, sondern auch die Struktur von Scrambler und Descrambler können zur Erschwerung unbefugten Mithörens in regelmäßigen oder unregelmäßigen Zeitabständen verändert werden. Andererseits kann der öffentliche Schlüssel auch im Pay-TV-Empfänger errechnet und zur Programmverteilzentrale CU zurückübertragen werden.

Die in der Zeichnung in der Programmverteilzentrale CU angedeutete Schlüsseleinrichtung S als solche kann in an sich bekannter Weise in Form digitaler Rechenwerke ausgeführt sein, so daß weitere Erläuterungen dazu an dieser Stelle nicht erforderlich sind; das gleiche gilt auch für den in der Programmverteilzentrale CU angedeuteten Zufallszahlengenerator Z und ggf. für Schlüsseleinrichtungen in den Pay-TV-Empfängern.

Abschließend sei noch folgendes bemerkt: Wird die Erfindung in einem passiven optischen Telekommunikationssystem eingesetzt, in dem einem eingangs erwähnten (aus DE-C1-42 04461 bekannten) Verfahren zufolge die Anfangsstellung und/oder die Struktur von in einer zentralen Telekommunikationseinrichtung vorgesehenen, dezentralen Einrichtungen zugeordneten Scramblern und von in den dezentralen Einrichtungen vorgesehenen Descramblern zu Rahmenbeginn wiederholt geändert wird, indem die zentrale Kommunikationseinrichtung mittels eines Zufallszahlengenerators jeweils eine zufällige neue Anfangsstellung und/oder Struktur für die den einzelnen dezentralen Einrichtungen zugeordneten Scrambler ermittelt und die zugehörige Anfangsstellung und/oder Struktur des zugehörigen Descramblers mit einem von der jeweiligen dezentralen Einrichtung übermittelten öffentlichen Schlüssel verschlüsselt der betreffenden dezentralen Einrichtung mitteilt, die diese Mitteilung mit dem zugehörigen geheimen Schlüssel entschlüsselt, wonach die Änderung von einem bestimmten Pulsrahmen an durchgeführt wird, so könnte es in seltenen Fällen passieren, daß ein für die Übertragung im passiven optischen Kommunikationssystem vorgesehener zusätzlicher Scrambler die Wirkung des gemäß der vorliegenden Erfindung vorgesehenen Scramblers gerade aufhebt. Dies kann einerseits dadurch vermieden werden, daß bereits verscrambelte ATM-Zellen besonders (z.B. an geeigneter Stelle im Header, in den ersten Bytes des Informationsfeldes, durch eine Ausscheidekennziffer im VPI-Feld o.ä.) gekennzeichnet und im passiven optischen Telekommunikationssystem nicht nochmals verscrambelt werden; da andererseits der Teilnehmer im allgemeinen weiß, daß er von der Gegenseite verscrambelte Informationen erhalten soll, kann alternativ auch durch eine vom Teilnehmer ausgehende Mitteilung das nochmalige Scrambeln im passiven optischen Telekommunikationssystem unterbunden werden.

## Patentansprüche

1. Verfahren zur Datensicherung in einem eine zentrale Telekommunikationseinrichtung (CU) und eine Mehrzahl von dezentralen Telekommunikationseinrichtungen (DU) umfassenden Digital-Telekommunikationssystem, insbesondere B-ISDN-Telekommunikationssystem, in dem die Signalübertragung von der zentralen Telekommunikationseinrichtung (CU) aus zu den dezentralen Einrichtungen (DU) hin mittels ATM-Zellen vor sich geht, **dadurch gekennzeichnet,** daß bei Pay-TV-Verteilung mittels ATM ein zu einem bei einem Pay-TV-Empfänger (DU) vorgegebenen geheimen Schlüssel passender öffentlicher Schlüssel in der Programmverteilzentrale (CU) zum Verschlüsseln von Sekundärschlüssel-Informationen zur Anpassung des Pay-TV-Empfängers (DU) an in der Programmverteilzentrale (CU) für den Pay-TV-Empfänger (DU) vorgesehene, wiederholt geänderte Übertragungsmodalitäten benutzt wird.

2. Verfahren nach Anspruch 1, **dadurch gekennzeichnet,** daß jeweils die Anfangsstellung und/oder die Struktur eines in der Programmverteilzentrale (CU) vorgesehenen Scramblers (Scr) und eines im Pay-TV-Empfänger (DU) vorgesehenen Descramblers (Descr) zu Rahmenbeginn wiederholt geändert wird, indem die Programmverteilzentrale (CU) mittels eines Zufallszahlengenerators jeweils eine zufällige neue Anfangsstellung und/oder Struktur für den Scrambler (Scr) ermittelt und die zugehörige Anfangsstellung und/oder Struktur des Descramblers (Descr) mit einem zu dem beim jeweiligen Pay-TV-Empfänger (DU) vorgegebenen geheimen Schlüssel passenden öffentlichen Schlüssel verschlüsselt dem betreffenden Pay-TV-Empfänger (DU) mitteilt, der diese Mitteilung mit dem zugehörigen geheimen Schlüssel entschlüsselt, wonach die Änderung von einem bestimmten Pulsrahmen an durchgeführt wird.

3. Verfahren nach Anspruch 1 oder 2, **dadurch gekennzeichnet,** daß die Übertragungsmodalitäten für verschiedene Pay-TV-Empfänger (DU) oder Gruppen von Pay-TV-Empfängern (DU) zu verschiedenen Zeitpunkten geändert werden.

## Claims

1. Method for data security in a digital telecommunications system which comprises a central telecommunications device (CU) and a plurality of local telecommunications devices (DU), in particular a B-ISDN telecommunications system, in which the signals are transmitted from the central telecommunications device (CE) in the direction of the local devices (DU) by means of ATM cells, characterized in that, in the case of pay-TV distribution by means of ATM, a public key which matches a secret key specified for a pay-TV receiver (DU) is used in the programme distribution centre (CU) to encrypt secondary-key information in order to match the pay-TV receiver (DU) to transmission modalities which change repeatedly and are provided in the programme distribution centre (CU) for the pay-TV receiver (DU).

2. Method according to Claim 1, characterized in that the initial position and/or the structure of a scrambler (Scr) which is provided in the programme distribution centre (CU) and of a de-scrambler (Descr) which is provided in the pay-TV receiver (DU) are/is changed repeatedly at the start of the frame, in that the programme distribution centre (CU) in each case uses a random number generator to determine a random new initial position and/or structure for the scrambler (Scr), and reports the associated initial position and/or structure of the de-scrambler (Descr) in encrypted form to the relevant pay-TV receiver (DU) using a public key which matches the secret key which is specified for the respective pay-TV receiver (DU), which pay-TV receiver (DU) decrypts this message using the associated secret key, after which the change is carried out starting from a specific pulse frame.

3. Method according to Claim 1 or 2, characterized in that the transmission modalities are changed at different times for different pay-TV receivers (DU) or groups of pay-TV receivers (DU).

## Revendications

1. Procédé pour la sécurité des données dans un système de télécommunication numérique, notamment un système de télécommunication RNIS B, qui comprend un dispositif (CU) de télécommunication central et une pluralité de dispositifs (DU) de télécommunication décentralisés et dans lequel la transmission de signaux du dispositif (CU) de télécommunication central aux dispositifs (DU) décentralisés s'effectue au moyen de cellules (ATM),
   caractérisé en ce que,
   pour une distribution de programmes de télévision à péage au moyen du mode de transfert asynchrone, on utilise, pour adapter le récepteur (DU) de télévision à péage à des modalités de transmission prévues dans le central (CU) de distribution de programmes pour le récepteur (DU) de télévision à péage et modifiées de manière réitérée, une clé publique dans le central (CU) de distribution de programmes, adaptée à une clé secrète prescrite pour un récepteur (DU) de télévision à péage et servant à coder des informations de clé secondaire.

2. Procédé suivant la revendication 1,

caractérisé en ce que
   la position initiale et/ou la structure d'un brouilleur (Scr) prévu dans le central (CU) de distribution de programmes et d'un débrouilleur (Descr) prévu dans le récepteur (DU) de télévision à péage sont modifiées de manière réitérée en début de trame par le fait que le central (CU) de distribution de programmes détermine au moyen d'un générateur de nombres aléatoires chaque fois une nouvelle position initiale aléatoire et/ou une nouvelle structure pour le brouilleur (Scr) et communique, de manière codée par une clé publique adaptée à la clé secrète prescrite pour le récepteur (DU) de télévision à péage associé, la position initiale et/ou la structure associée du débrouilleur (Descr) au récepteur (DU) de télévision à péage concerné, qui décode ce message par la clé secrète associée, la modification étant ensuite effectuée à partir d'une trame d'impulsions déterminée.

3. Procédé selon la revendication 1 ou 2,
   caractérisé en ce que
   les modalités de transmission pour divers récepteurs (DU) de télévision à péage ou groupes de récepteurs (DU) de télévision à péage sont modifiées à des instants divers.